# EUROPÄISCHE PATENTSCHRIFT

(11) **EP 1 106 330 B1**
(45) Veröffentlichungstag und Bekanntmachung des Hinweises auf die Patenterteilung: **23.04.2003**
(21) Anmeldenummer: 00124380.7
(22) Anmeldetag: 20.11.2000
(51) Int. Cl.: B29C 51/26

(54) **Vorrichtung zum Tiefziehen von becherförmigen Körpern**
Apparatus for stretch forming cup-shaped articles
Dispositif pour l'emboutissage de corps en forme de coupes

(30) Priorität: 02.12.1999 DE 19958065
(43) Veröffentlichungstag der Anmeldung: 13.06.2001
(73) Patentinhaber: Optipack GmbH & Co. KG, 86850 Fischach-Aretsried (DE)
(72) Erfinder: Westphal, Bodo, 37075 Göttingen (DE)
(74) Vertreter: Stahl, Gerhard F.W.

(56) Entgegenhaltungen:
- DE-A- 2 214 361
- DE-A- 3 936 891
- DE-C- 4 445 376

## Beschreibung

Die Erfindung betrifft eine Vorrichtung zum Tiefziehen von becherförmigen Körpern aus einer erhitzten Kunststofffolie, umfassend ein Oberwerkzeug und ein Unterwerkzeug, die relativ zueinander koaxial beweglich sind, um die Kunststofffolie zwischen sich einzuklemmen, einen in dem Unterwerkzeug angeordneten Schnittstempel, einen in dem Schnittstempel angeordneten gekühlten Formeinsatz, einen in dem Formeinsatz koaxial beweglichen Auswerfer, einen in dem Oberwerkzeug koaxial beweglichen Niederhalter, der zu einer Bewegung zum Schnittstempel hin vorgespannt ist, einen in dem Niederhalter angeordneten Vorstrecker, der am unteren Ende einer in dem Niederhalter koaxial verschiebbar gelagerten und mit einem Antrieb verbundenen Stange befestigt ist, und Luftkanäle, über die der von dem Vorstrecker, dem Niederhalter und der Folie begrenzte Raum mit Druckluft beaufschlagbar ist.

Bei einer derartigen Vorrichtung hat die Vorspannung des Niederhalters nach unten den Zweck, daß der Niederhalter sich relativ zum Oberwerkzeug nach oben bewegen kann, falls er beim Schließen der Vorrichtung auf irgendein Hindernis, wie z. B. Stanzreste, treffen sollte. Andererseits sollen der Niederhalter und der Schnittstempel die Folie zwischen sich einklemmen und festhalten, wenn diese beim Absenken des Vorstreckers in den Formeinsatz hinein gedrückt wird.

Bei einer in der DE-A-39 36 891 beschriebenen Vorrichtung der eingangs genannten Art wird die Kunststofffolie bereits beim Schließen der Vorrichtung zwischen dem Niederhalter und dem Schnittstempel eingeklemmt. Sobald der Niederhalter die erhitzte Kunststofffolie berührt, wird diese abgekühlt, was für den nachfolgenden Tiefziehvorgang jedoch nachteilhaft ist. Im Bereich des Siegelrandes der Folie kann es zu einer Wulstbildung kommen, und der Rand neigt zum Hochstellen.

Der Erfindung liegt die Aufgabe zugrunde, die gattungsgemäße Vorrichtung dahingehend weiterzubilden, daß eine Berührung der erhitzten Kunststofffolie mit der unteren Stirnfläche des Niederhalters vor dem Absenken des Vorstreckers vermieden wird.

Erfindungsgemäß wird diese Aufgabe dadurch gelöst, daß der Niederhalter unter der Vorspannkraft an einem Gegenhalter anliegt, wobei seine untere Endfläche im Abstand über der unteren Endfläche des Oberwerkzeugs angeordnet ist, und daß der Gegenhalter mit einem Antrieb vertikal bewegbar ist. Durch diese konstruktiven Maßnahmen wird eine frühzeitige Abkühlung der erhitzten Kunststofffolie im Bereich des Siegelrandes vermieden, weil der Niederhalter gleichzeitig oder später mit dem Vorstrecker mit der Kunststofffolie in Berührung gelangt. Eine Wulstbildung im Bereich des Siegelrandes der Kunststoffolie wird daher verhindert.

Zur Verwirklichung der zeitlichen Abhängigkeit der Absenkbewegung des Vorstreckers und des Niederhalters sind die Antriebe der Stange und des Gegenhalters vorzugsweise synchronisiert.

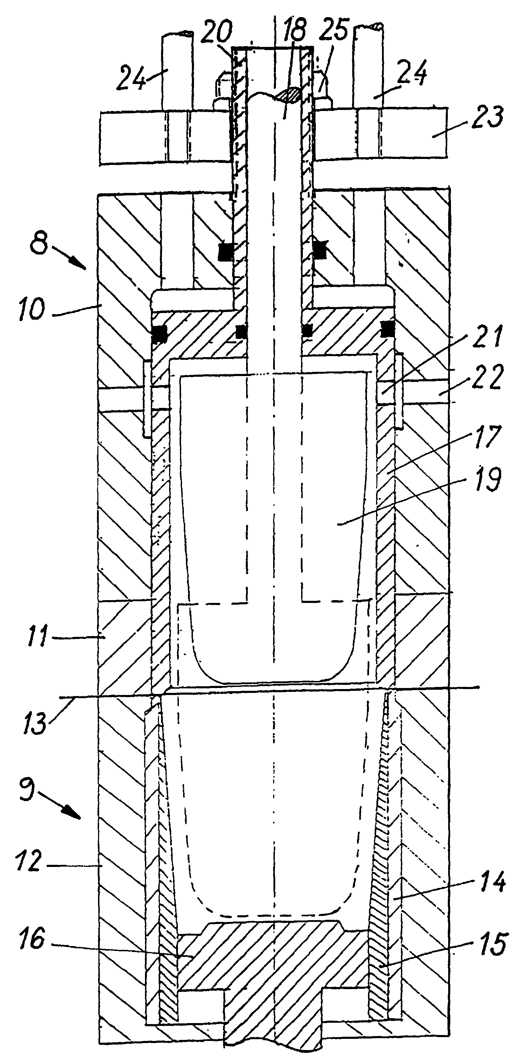

Ein Ausführungsbeispiel der Erfindung ist in der Zeichnung dargestellt und wird nachfolgend näher erläutert.

Die einzige Figur der Zeichnung zeigt einen Längsschnitt durch eine Vorrichtung zum Tiefziehen von becherförmigen Körpern aus einer erhitzten Kunststofffolie.

Die schematisch dargestellte Vorrichtung besteht aus einem Oberwerkzeug 8 und einem Unterwerkzeug 9. Das Oberwerkzeug 8 umfaßt einen rohrförmigen Mantel 10 und eine mit diesem koaxial verbundene ringförmige Schnittplatte 11. Das Unterwerkzeug 9 umfaßt ebenfalls einen rohrförmigen Mantel 12. Das Unterwerkzeug 9 ist gegenüber dem Oberwerkzeug 8 vertikal beweglich, um dazwischen eine Folie 13 aus einem thermoplastischen Kunststoff einzuklemmen. In eine Sackbohrung des Mantels 12 des Unterwerkzeugs 9 sind ein Schnittstempel 14 und ein gekühlter Formeinsatz 15 konzentrisch eingesetzt. In dem Formeinsatz 15 ist ein Auswerfer 16 vertikal beweglich gelagert. In einer Sackbohrung des Mantels 10 des Oberwerkzeugs 8 ist ein Niederhalter 17 vertikal beweglich gelagert, der pneumatisch oder mechanisch nach unten vorgespannt ist. Der Niederhalter 17 ist mit einem nach oben ragenden konzentrischen Rohrfortsatz 20 versehen. In dem Rohrfortsatz 20 des Niederhalters 17 ist eine Stange 18 beweglich gelagert, die mit einem (nicht gezeigten) Antrieb für eine vertikale Bewegung verbunden ist. Am unteren Ende der Stange 18 ist ein Vorstrecker 19 befestigt. der Vorstrecker 19 besteht aus einem vorzugsweise mit Glasfasern verstärkten Kunststoffmaterial. Der Außendurchmesser des Vorstreckers 19 ist kleiner als der Innendurchmesser des Niederhalters 17, so daß diese beiden Teile zwischen sich einen Ringkanal begrenzen. In dem Niederhalter 17 und in dem Mantel 10 des Oberwerkzeugs 8 sind Bohrungen 21 bzw. 22 ausgebildet. Die Bohrung 22 ist über ein (nicht gezeigtes) Ventil mit einer Druckluftquellle verbunden. Der Innenraum des Niederhalters 17 kann daher mit Druckluft beaufschlagt werden. Eine derartige Vorrichtung zum Tiefziehen von becherförmigen Körpern aus einer Kunststofffolie ist allgemein bekannt und bedarf daher keiner näheren Erläuterung.

Ein mit einer Bohrung versehener Gegenhalter 23 ist auf den Rohrfortsatz 20 des Niederhalters 17 aufgeschoben. Der Gegenhalter 23 ist über Stangen 24 mit einem (nicht gezeigten) Antrieb für eine vertikale Bewegung verbunden. Bei diesem Antrieb kann es sich um einen mechanischen, elektromagnetischen, pneumatischen oder hydraulischen Antrieb handeln. Der Antrieb der Stangen 24 ist mit dem Antrieb der Stange 18 synchronisiert, wie dies nachfolgend noch näher erläutert wird. Auf den Rohrfortsatz 20 des Niederhalters 17 ist eine als Anschlag dienende Mutter 25 aufgeschraubt. Der nach unten vorgespannte Niederhalter 17 stützt sich über die Mutter 25 an dem Gegenhalter 23 ab. Durch die Höhenlage des Gegenhalters 23 ist somit die Höhenlage der Mutter 25 und damit des Niederhalters 17 definiert.

Normalerweise ist der Gegenhalter 23 in einer solchen Höhe angeordnet, daß sich die untere ringförmige Stimfläche des Niederhalters 17 in einem geringen Abstand über der unteren Stirnfläche der Schnittplatte 11 befindet.

Zum Tiefziehen eines becherförmigen Körpers wird die mit einer (nicht gezeigten) Heizeinrichtung erhitzte Kunststofffolie 13 zwischen dem Oberwerkzeug 8 und dem abgesenkten Unterwerkzeug 9 angeordnet. Daraufhin wird das Unterwerkzeug 9 nach oben bewegt, bis es die Folie 13 an das Oberwerkzeug 8 andrückt. Daraufhin wird die Stange 18 mit der zugeordneten Antriebseinrichtung nach unten bewegt. Dadurch gelangt der Vorstrecker 19 an der erhitzten Kunststofffolie 13 zur Anlage. Zu diesem Zeitpunkt werden die Stangen 24 und damit der Gegenhalter 23 mit der zugeordneten Antriebseinrichtung nach unten bewegt. Der mit der Mutter 25 am Gegenhalter 23 anliegende Niederhalter 17 kann sich daher unter seiner Vorspannkraft soweit nach unten bewegen, bis er an der auf dem Schnittstempel 14 aufliegenden Kunststofffolie 13 zur Anlage gelangt. Der Vorstrecker 19 setzt seine Abwärtsbewegung fort, bis er die in der Zeichnung mit unterbrochenen Linien dargestellte Endstellung erreicht. Bei dieser Bewegung drückt der Vorstrecker 19 die zwischen dem Niederhalter 17 und dem Schnittstempel 14 eingespannte Folie 13 nach unten in den von dem Formeinsatz begrenzten Formhohlraum hinein. Durch die Bohrungen 21 und 22 des Niederhalters 17 bzw. des Mantels 10 wird Druckluft eingeleitet, so daß an der Oberseite der Kunststofffolie 13 eine höherer Druck herrscht als an ihrer Unterseite. Infolge dieses Überdrucks wird die Kunststofffolie 13 an die Innenfläche des Formeinsatzes 15 bzw. an die Oberseite des Auswerfers 16 angedrückt und in die Form eines Bechers gebracht. Durch die Berührung mit dem gekühlten Formeinsatz 15 kühlt die tiefgezogene Kunststofffolie 13 ab, und sie wird formstabil. Daraufhin wird die Stange 18 mit dem Vorstrecker 19 nach oben bewegt. Gleichzeitig wird der im Inneren der Vorrichtung herrschende Überdruck über die Bohrungen 21 und 22 des Vorstreckers 19 bzw. des Mantels 10 abgebaut. Sodann wird das Unterwerkzeug 9 nach unten bewegt, und der Auswerfer 16 wird gegenüber dem Formeinsatz 15 nach oben bewegt, um den tiefgezogenen becherförmigen Körper auszuwerfen. Im Anschluß daran werden die Stangen 24 und damit der Gegenhalter 23 in die Normalstellung nach oben bewegt. Der Niederhalter 17, der dieser Bewegung des Gegenhalters 23 zwangsweise folgt, kehrt daher gleichfalls in seine Ausgangsstellung zurück.

Falls sich zwischen dem Ober- und Unterwerkzeug 8, 9 Fremdkörper, wie z. B. Stanzabfälle, befinden sollten, dann kann der Niederhalter 17 entgegen der auf diesen ausgeübten Vorspannkraft nach oben ausweichen.

### Bezugszeichenliste:

- 8: Oberwerkzeug
- 9: Unterwerkzeug
- 10: Mantel von 8
- 11: Schnittplatte
- 12: Mantel von 9
- 13: Kunststofffolie
- 14: Schnittstempel
- 15: Formeinsatz
- 16: Auswerfer
- 17: Niederhalter
- 18: Stange
- 19: Vorstrecker
- 20: Rohrfortsatz von 17
- 21: Bohrung in 17
- 22: Bohrung in 10
- 23: Gegenhalter
- 24: Stangen
- 25: Mutter

## Patentansprüche

1. Vorrichtung zum Tiefziehen von becherförmigen Körpern aus einer erhitzten Kunststofffolie, umfassend ein Oberwerkzeug (8) und ein Unterwerkzeug (9), die relativ zueinander koaxial beweglich sind, um die Kunststofffolie (13) zwischen sich einzuklemmen, einen in dem Unterwerkzeug angeordneten Schnittstempel (14), einen in dem Schnittstempel angeordneten gekühlten Formeinsatz (15), einen in dem Formeinsatz koaxial beweglichen Auswerfer (16), einen in dem Oberwerkzeug koaxial beweglichen Niederhalter(17), der zu einer Bewegung zum Schnittstempel hin vorgespannt ist, einen in dem Niederhalter angeordneten Vorstrecker (19), der am unteren Ende einer in dem Niederhalter koaxial verschiebbar gelagerten und mit einem Antrieb verbundenen Stange (18) befestigt ist, und Luftkanäle (21,22), über die der von dem Vorstrecker, dem Niederhalter und der Folie begrenzte Raum mit Druckluft beaufschlagbar ist, **dadurch gekennzeichnet, daß** der Niederhalter (17) unter der Vorspannkraft an einem Gegenhalter (23) anliegt, wobei seine untere Endfläche im Abstand über der unteren Endfläche des Oberwerkzeugs (8) angeordnet ist, und daß der Gegenhalter (23) mit einem Antrieb vertikal bewegbar ist.

2. Vorrichtung nach Anspruch 1, **dadurch gekennzeichnet, daß** die Antriebe der Stange (18) und des Gegenhalters (23) synchronisiert sind.

## Claims

1. An apparatus for stretch forming cup-shaped articles made of heated plastics film, comprising an upper tool (8) and a lower tool (9) which are coaxially displaceable with respect to one another in order to clamp the plastics film (13) between them, a cutting die (14) arranged in the lower tool, a cooled moulding insert (15) arranged in the cutting die, an ejector (16) coaxially movable in the forming insert, a holder (17) coaxially movable in the upper tool and preloaded for movement towards the cutting die, a prestretcher (19) arranged in the holder, which prestretcher is attached to the lower end of a rod (18) journalled to be coaxially displaceable in the holder and connected to a drive, and air passages (21, 22) through which the space delimited by the prestretcher, the holder and the film can be pressurised with compressed air, **characterised in that** the holder (17) bears under the preload against an opposing holder (23), its lower end face being arranged at a distance above the lower end face of the upper tool (8), and **in that** the opposing holder (23) is vertically movable by a drive.

2. Apparatus according to Claim 1, **characterised in that** the drives of the rod (18) and of the opposing holder (23) are synchronised.

## Revendications

1. Dispositif pour emboutir des corps en forme de coupe dans une feuille en matière plastique chauffée, comprenant un outil d'emboutissage supérieur (8) et un outil d'emboutissage inférieur (9) qui sont mobiles l'un par rapport à l'autre de façon coaxiale fin de serrer entre eux la feuille de matière plastique (13), un poinçon de découpage (14) placé dans l'outil inférieur, une empreinte rapportée (15) refroidie logée dans le poinçon de découpage, un éjecteur (16) mobile de façon coaxiale dans l'empreinte rapportée, un serre-flan (17) mobile de façon coaxiale dans l'outil supérieur et qui est précontraint pour effectuer un mouvement en direction du poinçon de découpage, un dispositif d'étirage préalable (19) placé dans le serre-flan, qui est fixé à l'extrémité inférieure d'une tige (18) montée de façon à être mobile coaxialement et reliée à un entraînement, et des canaux d'air (21, 22) par le biais desquels l'espace délimité par le dispositif d'étirage préalable, le serre-flan et la feuille peut être rempli d'air comprimé, **caractérisé en ce que** le serre-flan (17) est appliqué sous l'effet de la précontrainte contre un contre-appui (23), sachant que sa surface d'extrémité inférieure est placée à distance au-dessus de la surface d'extrémité inférieure de l'outil supérieur (8), et **en ce que** le contre-appui (23) peut être déplacé verticalement au moyen d'un entraînement.

2. Dispositif selon la revendication 1, **caractérisé en ce que** les entraînements de la tige (18) et du contre-appui (23) sont synchronisés.
